# EUROPEAN PATENT APPLICATION

(11) **EP 2 747 468 A1**
(43) Date of publication of application: **25.06.2014**
(21) Application number: 12197757.3
(22) Date of filing: 18.12.2012
(51) Int. Cl.: H04W 12/04, H04W 88/02

(54) **Method for granting access to a network and device for implementing this method**

(71) Applicant: Nagravision S.A., 1033 Cheseaux-sur-Lausanne (CH)
(72) Inventor: Wendling, Bertrand, 01220 Divonne-les-Bains (FR)
(74) Representative: Leman Consulting S.A.

(57) **Abstract**

Method for granting access to a network (40, 60) to an electronic communication device (30) via a router (50) using a secure key (20) to encrypt the communication between the router (50) and the electronic communication device (30), comprising the steps of:
- establishing a first link (21) between a key carrier (10) and the electronic communication device (30) for transferring said secure key (20) to an application software (35) installed in the communication device (30),
- using said secure key (20) to encrypt and decrypt the data (25) transferred between the router (50) and the electronic communication device (30) via a wireless second link (22).

## Description

### TECHNICAL FIELD

The present invention relates to the field of computer networks, in particular access to such a network by an electronic communication device, for instance a personal computer or a portable device. Thanks to the expansion of portable communication device such as tablet computers, laptops and smart phones, today a lot of people have access to Internet via a wireless connection, in particular via a local area network within a home or a business environment. The wireless access to a local area network makes it necessary to develop a security policy in business and home places. If the access to the wireless point is not secured enough, it could result a problem regarding the legal responsibility of the owner access point when a third party performs illegal actions on a network, such as Internet, through an access point poorly secured. Illegal actions can refer e.g. to downloading or spreading out unauthorized copies of works protected by copyright, such as music, photo and video.

### BACKGROUND ART

The access to a local area network is protected by a transmission key which encrypts the data transmitted within this network, for instance between a personal computer and a router. Physically, the router defines the juncture between the local area network (LAN) or the wireless local area network (WLAN) and the World Wide Web (Internet) or any other second network. If the transmission key is shared with another communication device (e.g. a host computer) within the range of the signal emitted by the router, then this communication device will have access to Internet. Thus, granting access to a WLAN depend on the transmission key. To provide an efficient protection against malicious persons, this transmission key must comprises a large number of various characters (prints) forming a string which is not easy to deduce. However, and particularly within a home environment, such a string is generally short since securing the access with a strong transmission key is cumbersome, in particular each time this key must be entered in a host device of a visitor. Besides, an efficient and strong key is more difficult, if not impossible, to remember. To remember the transmission key (especially, among a lot of passwords required today for having access to many accounts on Internet), the user frequently writes the key in a hand-written notebook. However, these solutions do not meet the initial security goals sought by the transmission key which becomes relatively easy to found or to guess.

Therefore, there is a need for improving the management of transmission keys required for granting access to a network, in particular to a WLAN, typically within a home or business environment.

### SUMMARY OF THE INVENTION

In order to solve the above-mentioned problem, the present invention aims to provide a solution for granting access to a network for an electronic communication device via a router using a secure key to encrypt the communication between the router and the electronic communication device. According to the first subject-matter of the invention, this solution refers to a method comprising the steps of:
- establishing a first link between a key carrier and the electronic communication device for transferring the secure key to an application software installed in the communication device,
- using the secure key to encrypt and decrypt the data transferred between the router and the electronic communication device.

According to the second subject-matter of the invention, this solution refers to an electronic device, in particular to a key carrier comprising:
- a secure non-volatile memory for storing the secure key,
- a communication interface for exchanging data with the electronic communication device.

According to the invention, the user does not need to remember the secure key used for granting access to his LAN or WLAN and he does not need to write it somewhere to not forget it. According to one embodiment, the user does not need to manually enter the secure key in the key carrier avoiding thus input errors, particularly in the case where the secure key comprises a long string of characters that does not make sense when read.

Other advantages and embodiments will be presented in the following detailed description.

### BRIEF DESCRIPTION OF THE DRAWINGS

The present invention will be better understood thanks to the attached figures in which:
Figure 1 is a bloc diagram depicting an overview of the main devices involved in the method of the present invention,
Figure 2 provides examples of the key carrier according to another embodiment,

### DETAILED DESCRIPTION

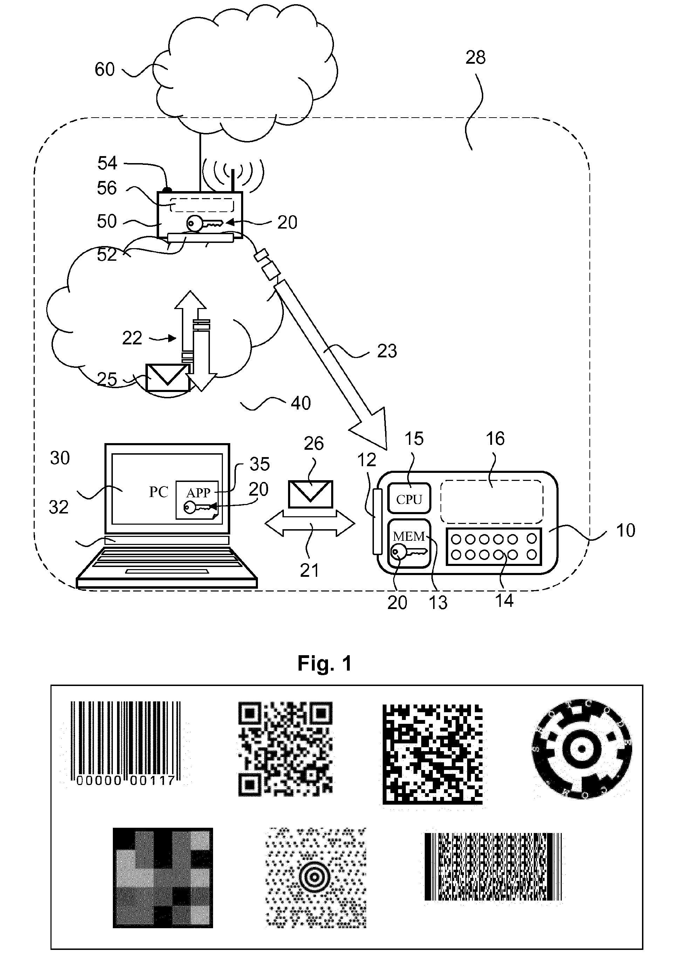

Referring to Fig. 1, the latter is an overview of the system relating to the method of the present invention. This system comprises an electronic communication device 30 such as a personal computer, a tablet computer, a laptop, a smart phone or any other device (e.g. printer, internet radio, etc..) which is connectable to a local area network 40, in particular a WLAN controlled by a router 50. This router represents the border between the WLAN and a second network 60, for instance a public network such as Internet to which this router is therefore also connected. The electronic communication device 30 is connectable to the router via a wireless link 22, typically a radio signal emitted by the router 50. The radio range of the router defines the local environment 28 (e.g. a home or a business area network) within which data 25 can be exchanged between the router and any authorized device 30. Of course, the link 22 could be also a wired link.

To secure the communications within the WLAN and preventing third persons to have access to the second network 60 (Internet) via the first network 40 (WLAN), data 25 exchanged between the router and the electronic communication device 30 are encrypted by a secure key 20, also known as transmission key KT. Accordingly, any electronic communication device 30 wanting to have access to the second network 60 via the router 50 must have access to the first network 40. Access to the WLAN 40 is granted by entering the adequate secure key 20 into the electronic communication device 30, in particular in application software 35 installed in this device 30.

To this end, the present invention suggests to use a key carrier 10 which can have several forms. In a preferred embodiment, the key carrier is in a form of an electronic support, in particular a smart card as shown in Fig. 1.

According to the invention, the method comprises the step of establishing a first link 21 between the key carrier 10 and the electronic communication device 30 for transferring the required secure key 20 to said application software 35 in the communication device 30. Then, the secure key 20 can be used by the electronic communication device 30 to encrypt and decrypt data 25 transferred between the router 50 and the electronic communication device 30 via the wireless second link 22.

In the basic embodiment of the invention, the transfer of the secure key 20 can be performed by any user having the key carrier. In the case where the key carrier 10 is an electronic device, the use of the key carrier can be protected by a code, such as a password or a personal identification number (PIN). Accordingly, the transfer of the secure key 20 from the key carrier 10 to the application software 35 requires the following steps:
- the entry of the personal identification number PIN into the key carrier 10, and then
- the validation of said personal identification number with respect to a reference code stored in a secure non-volatile memory 13 of the key carrier.

To this end, the key carrier 10 can be provided with an user interface 14, e.g. a keyboard as shown in Fig. 1. At each time, the user wants to transfer the secure key 20 in an electronic communication device 30, the user must previously enter a PIN code in the key carrier. If the entered PIN code corresponds to a reference code stored in the memory 13, then the transfer of the key can be performed. Otherwise, the key carrier refuses to send the secure key to device 30. To further increase the access protection to the key carrier, the user can have for instance three attempts to enter the PIN code. After entering the PIN code incorrectly a third time, the key carrier can be temporarily or permanently locked. A specific procedure could be necessary to unlock the key carrier. For instance, the user should be asked to contact a service center either for replacing the key carrier or for unlocking it.

According to the preferred embodiment, the first link 21, used for transferring the secure key to the electronic communication device 30, is a wireless short-range communication link. Such a link could by e.g. a Bluetooth link, an infrared link or a RFID link. Preferably, the first link is a NFC link, namely a Near-Field-Communication link. It is believed by analysts that by 2015, 50% of mobile market would have Near Field Communication (NFC) technology integrated. Thus, electronic communication devices such as smart phones, personal computer or tablet computer of the new generation will be NFC compliant. NFC allows secure wireless (radio) communication between two devices which are in a very near proximity (typically a few centimeters).

In variant, the first link 21 could be a wired link, typically a USB communication link.

In order to perform data exchange via the first link 21, the key carrier is provided with a communication interface 12. This communication interface 12 can be used directly to exchange data with the electronic communication device 30, e.g. through its communication port 32, or can be used to communicate with an intermediate device such as a card reader connected to the device 30, for instance in the case where the key carrier is a smart card and the first link is a USB link.

The key carrier 10 comprises the secure key 20 stored in the non-volatile memory 13. This secure key can be already present in the memory when the user gets the key carrier, for instance during its manufacturing or at least before the first use of the key carrier. In variant, the secure key 20 can be loaded, reloaded or changed in the memory 13 at any time by the user. To this end, the secure key can be loaded in the key carrier by means of the user interface 14 comprised in the key carrier. Alternatively, this key can be loaded via the communication interface 12, e.g. whether loading the secure key is compliant with the technology used by the communication interface 12.

According to one embodiment, the secure key 20 is manually loaded in the key carried 10 via a keypad acting as user interface 14. Such a keypad can be provided with several buttons, typically buttons corresponding to numbers 0-9 and at least one so-called "enter" or "OK" button, one "clear" button and one "on/off" button. Of course, other buttons such as alphabetic buttons could be also included. Such a keypad is not limited to load the secure key, but it could be also used by the user for entering the personal identification number (PIN code). For that purpose, the user interface 14 could be a biometric sensor such as a fingerprints sensor, a micro-camera or a voice sensor for acquiring biometric data of the user. In this case, such a biometric sensor would be only used for authenticating the user in a different way than by a PIN code.

In variant, the secure key 20 can be automatically loaded in the key carrier, for instance via the first link 21 and by using the electronic communication device 30 as input means. Accordingly, the keyboard or any other input means of the electronic communication device 30 could be used to enter the secure key before to send it to the key carrier, typically through the communication interface 12. Alternatively, the secure key can be automatically loaded in the key carrier via a third link 23 established between the router 50 and the key carrier 10, in particular the communication interface 12 or the user interface 14 of the key carrier. To this end, the router 50 could be provided with a specific interface 52 compliant with one of the interfaces 12, 14 of the key carrier. For instance, the interface 52 and the communication interface 12 could be NFC compliant. Thus the secure key 20 could be loaded in the key carrier 10 directly from the router 50 by putting the key carrier close to the router just for loading the secure key. To trigger the transfer of this secure key, one might consider to press on a specific button 54 on the router. Each time the user press on this button, the same secure key is transmitted to the key carrier, e.g. via a NFC signal.

In variant, the present method could further comprise an initialization phase during which the secure key 20 can be generated by the router before to be transferred to the key carrier. To this end, a long pressure on the specific button 54 of the router could generate a new secure key (i.e. different from the previous one) which can be transmitted immediately after. Generating new secure keys can be performed by a random generator (or a pseudo random generator) within the router. Accordingly, the secure key 20 could be generated by a random or a pseudo random generator just before the first use of the key carrier 10 for transmitting the secure key to the electronic communication device 30. Besides, a specific command on the button 54 could also reset the secure key to its initial value (i.e. as originally implemented in the router).

According to another embodiment, transferring the secure key 20 from the router to the key carrier can be achieved by reading this key on a display means 56 of the router 50, then by manually entering it into the key carrier 10 by means of the keypad 14. Displaying the secure key on the display means 56 could be performed by means of the specific button 54 of the router, e.g. in accordance to a particular handling of this button.

According to another embodiment of the present invention, the key carrier 10 could still comprise the secure key 20, while not being necessarily an electronic device. Indeed and as shown in the examples of Fig. 2, the key carrier can be in the form of a graphical code and the first link 21 could be an optical link established by the electronic communication device 30 for reading this graphical code. Such a graphical code can be a barcode having one or two dimensions such as so-called "QR code" referring to "Quick Response Code", or any other code having a special design which is indecipherable (unreadable) just by seeing it, namely without an optical scanning device. The optical link can be provided by the electronic communication device itself, in particular by an embedded camera acting as an optical reader (or as a scanning means) for capturing the graphical code before to process it by means of dedicated application software. Instead of an embedded camera, one could also use any connectable optical reader such as a webcam or a scanning pen. As example of graphical codes, Fig. 2 discloses successively graphical codes, namely a barcode, a QR-code, a Datamatrix, a Shotcode, a colorzip (in black and white), a Maxicode and a PDF417 code.

The present invention also relates to the key carrier for granting access to a network to an electronic communication device 30 via a router 50. The network can be a wireless local area network 40 or another network reachable via the WLAN. The communications between the router and the electronic communication device are secured by a symmetric encryption algorithm which uses the secure key 20 for encrypting and decrypting data exchanged between these two entities. The key carrier 10 is an electronic device comprising a secure non-volatile memory 13, for storing at least the secure key 20, and at least one communication interface 12 for exchanging data 26 with the electronic communication device 30.

As already disclosed before, the key carrier can further comprise a display means 16 and a user interface 14 allowing the user to enter PIN code or transmission key directly in the key carrier.

The key carrier can be NFC compliant by using a communication interface 12 supporting near field communications. The communication interface can be used for sending data, typically the secure key 20, to the electronic communication device 30. According to one embodiment, the communication interface can be also used for receiving data from this device 30 or from the router 50, e.g. in view to directly load the secure key into the key carrier. This can be achieved, for instance in the case where the router is provided with a specific interface 52 compliant with the communication interface 12 (or the user interface 14) of the key carrier. The management of the components and functions of the key carrier is directed by a central processing unit 15. The memory 13 could store several secure keys 20, each used for encrypting/decrypting data with a specific router. Accordingly, each secure key could be assigned to a router identifier so that the user can select the right secure key to be sent to the electronic communication device 30 for granting to the latter the access to the network 40, 60. The selection of the secure key 20 could be automated, e.g. by receiving the relevant identifier (assigned to the secure key) from the electronic communication device 30 (via the first link 21) or from the router 50 (via the third link 23). In one another variant, the access to certain secure keys could be protected by a specific PIN code, thus limiting the user to access to certain keys only.

In accordance with the preferred embodiment of the invention, the key carrier 10 of the present invention is a smart card. Such a card could be delivered with the router when the user buys or acquires the router. The secure key used by this router could be already preloaded in the key carrier, thus avoiding the user to load it before the first use.

The key carrier of the present invention can became the secure access sesame to networks without the cumbersome of typing and remembering long and complex transmission keys.

## Claims

1. Method for granting access to a network (40, 60) to an electronic communication device (30) via a router (50) using a secure key (20) to encrypt the communication between the router (50) and the electronic communication device (30), comprising the steps of:
- establishing a first link (21) between a key carrier (10) and the electronic communication device (30) for transferring said secure key (20) to an application software (35) installed in the communication device (30),
- using said secure key (20) to encrypt and decrypt data (25) transferred between the router (50) and the electronic communication device (30) via a wireless second link (22).

2. Method of claim 1, wherein transferring the secure key (20) from the key carrier (10) to the application software (35) requires previously the entry of a personal identification number PIN into the key carrier (10) and the validation of said personal identification number with respect to a reference code stored in a secure non-volatile memory (13) of the key carrier.

3. Method of claim 1 or 2, wherein said first link (21) is a wireless short-range communication link.

4. Method of claim 1 or 2, wherein said first link (21) is a wire USB communication link.

5. Method of any of the claims 1 to 4, wherein said key carrier (10) comprises said secure key (20) in a secure non-volatile memory (13).

6. Method of claim 5, further comprising an initialization phase for generating said secure key (20) by said router (50), then for loading said secure key (20) in the secure non-volatile memory of the key carrier (10).

7. Method of claim 5 or 6, wherein said secure key (20) is loaded in the key carrier (10) either by means of said communication interface (12) or by means of a user interface (14) comprised in the key carrier (10).

8. Method of claim 7, wherein said secure key (20) is manually loaded in the key carrier (10) via a keypad acting as said user interface (14).

9. Method of claim 7, wherein said secure key (20) is automatically loaded in the key carrier (10), either via the first link (21) and by using the electronic communication device (20) as input means, or via a third link (23) established between a specific interface (52) of the router (50) and the communication interface (12) of the key carrier (10).

10. Method of claim 6, wherein loading said secure key (20) in the key carrier (10) is performed by reading said secure key (10) on a display means (56) of the router (50), then manually loading it into the key carrier (10) by means of a keypad acting as said user interface (14).

11. Method of claim 1, wherein said key carrier (10) is a graphical code and said first link (21) is an optical link established for reading said graphical code with an optical reader of the electronic communication device (20).

12. Key carrier (10) for granting access to a network (40, 60) to an electronic communication device (30) via a router (50) using a secure key (20) to encrypt communication data (25) between the router (50) and the electronic communication device (30), comprising:
- a secure non-volatile memory (13) for storing said secure key (20),
- a communication interface (12) for exchanging data (26) with said electronic communication device (30).

13. Key carrier (10) of claim 12, further comprising a display (16) and a data input interface (14).

14. Key carrier (10) of claim 12 or 13, wherein said communication interface (12) is NFC compliant.

15. Key carrier (10) of any of claims 12 to 14, **characterized in that** it is a smart card.
